# EUROPEAN PATENT SPECIFICATION

(11) **EP 4 343 169 B1**
(45) Date of publication and mention of the grant of the patent: **05.03.2025**
(21) Application number: 24155992.1
(22) Date of filing: 14.06.2022
(51) Int. Cl.: B25J 9/10, F16H 1/32

(54) **SPEED REDUCER AND ROTATING DEVICE**
UNTERSETZUNGSGETRIEBE UND DREHVORRICHTUNG
RÉDUCTEUR DE VITESSE ET DISPOSITIF ROTATIF

(30) Priority: 25.06.2021 JP 2021105572
(43) Date of publication of application: 27.03.2024
(62) Divisional of application: 22179027.2
(73) Proprietor: Nabtesco Corporation, Tokyo 102-0093 (JP)
(72) Inventor: NAKAMURA, Koji, Tokyo, 1020093 (JP); KAMAGATA, Shuichi, Tokyo, 102-0093 (JP)
(74) Representative: Grünecker Patent- und Rechtsanwälte PartG mbB

(56) References cited:
- EP-A1- 3 135 904
- EP-B1- 0 408 314
- WO-A1-2013/065261
- WO-A1-2020/217831
- CN-A- 108 458 056
- DE-A1- 102017 126 737
- DE-A1- 102019 203 058
- JP-A- S63 243 547
- US-A1- 2001 012 809
- US-B2- 7 811 193

## Description

### TECHNICAL FIELD

The present invention relates to a speed reducer for an industrial robot and a rotating device comprising such a speed reducer.

### BACKGROUND

Industrial robots and machine tools include arms rotatably coupled to each other and a motor unit provided at an articular portion (joint) between the arms to drive the arms. The motor unit includes a motor and a speed reducer connected to the motor. As the motor rotates, a motor torque is generated. The motor torque is reduced in speed by the speed reducer and output to the arms.

Such industrial robots and the like include robots that are capable of cooperatively working with human operators. Speed reducers that can be used in such cooperative robots have been being developed (see, for example, JP 2019 072842 A). JP 2019 072842 A discloses a speed reducer including a plurality of spur gears (transmission gears) and an input gear. The input gear engages with the spur gears, thereby rotating the spur gears synchronously.

DE 10 2017 126 737 A1 discloses a speed reducer according to the preamble of independent claim 1.

An eccentric orbiting reducer where the speed reduction is achieved by eccentrically revolving the pinions is also known from US 2001/012809 A1.

### SUMMARY

The industrial robots described above are installed closely to human operators. Therefore, the industrial robots are required to lower the operation noise to such a level that does not bother the operators. In precision speed reducers that can be used in the industrial robots, however, the input gear rotates at a higher speed than the other parts. Therefore, loud noise tends to be generated at the engagement between the input gear and the spur gears (transmission gears). It has been thus required to lower the noise generated at the engagement.

The present invention provides a speed reducer for an industrial robot and a rotating device comprising such a speed reducer that are capable of lowering noise generated at the engagement between the input gear and the transmission gears, thereby achieving a low noise level.

The present invention provides a speed reducer for an industrial robot, comprising an outer tube having a plurality of internal teeth surrounding an axis of rotation, a carrier rotatably provided inside the outer tube, where the carrier is fixedly attached to an output shaft, an input shaft provided on a driving source, a plurality of crankshafts rotatably supported by the carrier and connected to the input shaft, where the crankshafts each have an eccentric portion eccentric to an axis of rotation of the output shaft, an oscillating gear configured to oscillatorily rotate together with the eccentric portions of the crankshafts, a plurality of transmission gears configured to rotate when acted upon by the oscillatory rotation of the oscillating gear, where the transmission gears are respectively coaxial with the crankshafts, and an input gear provided on the input shaft, where the input gear engages with the transmission gears to synchronously rotate the transmission gears. The input gear and the transmission gears engage with each other with 6 to 8 teeth. The input gear and the transmission gears are configured such that a pressure angle is no less than 14.5° and no more than 20.0°, a tooth thickness is no less than 3 mm and no more than 30 mm and a module (a pitch circle diameter/the number of teeth) is no less than 0.8 and no more than 3.0.

With such configurations, the input gear and the transmission gears engage with each other with 6 to 8 teeth. The above-described speed reducer can thus successfully accomplish lowered noise at the engagement between the input gear and the transmission gears. As a result, tall teeth are applicable to the transmission gears, so that the speed reducer can achieve a lowered noise level. Therefore, precision speed reducers can be effectively applicable to industrial robots and the like. Furthermore, the input gear and the transmission gears are configured such that a pressure angle is no less than 14.5° and no more than 20.0°, a tooth thickness is no less than 3 mm and no more than 30 mm and a module (a pitch circle diameter/the number of teeth) is no less than 0.8 and no more than 3.0. The above-described speed reducer can thus further lower the noise generated at the engagement between the input gear and the transmission gears.

The present invention further provides a rotating device comprising a device body, a rotating body with a working head, a motor provided on the device body, where the motor is configured to produce a driving force to rotate the rotating body, and the speed reducer according to the above for reducing speed of rotation of the motor.

With such configurations, the input gear and the transmission gears engage with each other with 6 to 8 teeth. The above-described speed reducer can thus successfully achieve lowered noise at the engagement between the input gear and the transmission gears. Accordingly, precision speed reducers can be effectively applicable to rotating devices including the industrial robot that includes the device body, the rotating body with the working head, the motor provided on the device body, where the motor is configured to produce a driving force to rotate the rotating body, and the speed reducer for reducing speed of rotation of the motor.

### ADVANTAGEOUS EFFECTS

The above-described speed reducers and rotating devices are capable of lowering noise generated at the engagement between the input gear and the transmission gears. As a result, the speed reducers and rotating devices can accomplish lowered noise.

### BRIEF DESCRIPTION OF THE DRAWINGS

Fig. 1 is a side view showing an industrial robot including a speed reducer relating to an embodiment.
Fig. 2 is a schematic front view showing the speed reducer according to the embodiment.
Fig. 3 is a sectional view of the speed reducer relating to the embodiment along the line I-I in Fig. 2.
Fig. 4 is an enlarged view of a main part of engagement between an input gear and spur gears in the speed reducer relating to the embodiment.
Fig. 5 shows results of measuring sound pressure for implementation and comparative examples.

### DESCRIPTION OF THE PREFERRED EMBODIMENTS

The embodiments of the present invention will be hereinafter described with reference to the drawings. In the following embodiments and modifications, like elements will be denoted by the same reference signs and redundant descriptions will be partly omitted.

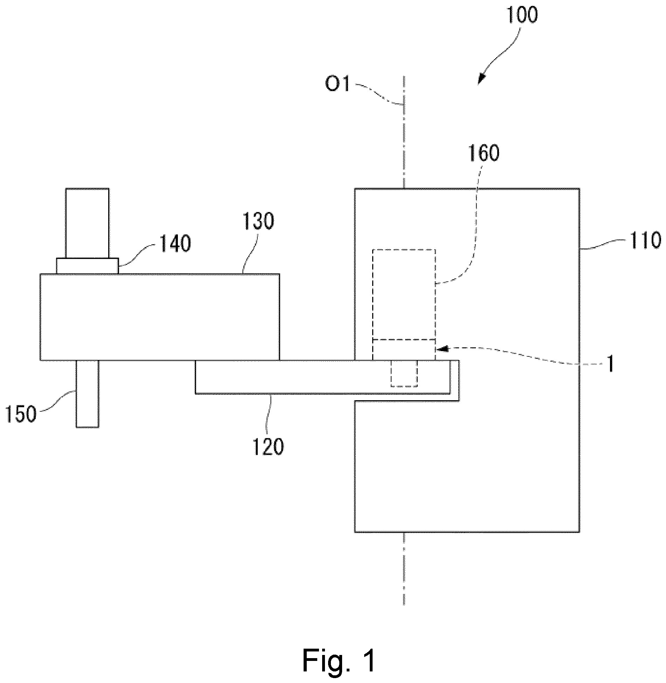

Fig. 1 is a side view of an industrial robot 100. The industrial robot 100 uses, as a driving unit, a speed reducer 1. The speed reducer 1 is provided in a reducer-installed motor. The industrial robot 100 relating to the present embodiment (rotating device) is an industrial robot used, for example, for feeding, shipping, transporting, and assembling parts of precision equipment and the like. The industrial robot 100 has a pedestal 110 (device body), a first arm 120 (rotating body), a second arm 130 (rotating body), a working head 140, and an end-effector 150.

The first arm 120, which is configured to rotate around an axis O1, is coupled with the pedestal 110. The second arm 130, which is configured to rotate around an axis parallel to the axis O1, is coupled with the first arm 120. The working head 140 is provided at the front end of the second arm 130 and coupled with the end-effector 150. The pedestal 110 has therein a motor 160 such as a servomotor, and the speed reducer 1 for reducing the speed of the rotations of the motor 160. The first arm 120 is configured to rotate when acted upon by the driving force form the motor 160. An input shaft 3 (described below) of the speed reducer 1 is coupled with the rotatable shaft of the motor 160. The output shaft of the speed reducer 1 is coupled with the first arm 120. In this manner, when the driving force from the motor 160 is transmitted to the first arm 120 through the speed reducer 1, the first arm 120 rotates within a horizontal plane around the axis O1.

As shown in Fig. 1, the speed reducer 1 is provided in the industrial robot 100 at an articular portion (joint) of the first arm 120, which is rotatably connected to the pedestal 110. The speed reducer 1 receives a motor torque inputted thereto from the motor 160 serving as a power source, reduces the speed of the motor torque with a predetermined reduction ratio and outputs the speed-reduced torque to an output shaft. In other words, the speed reducer 1 is configured to change the number of rotations at a predetermined ratio and transmit a resulting driving force between a first member such as a drive source and a movable part such as an arm.

In the description of the embodiment, the term "axial direction" refers to the direction extending along the axis O1 of the motor 160 of the speed reducer 1 (see Fig. 1). The term "radial direction" refers to the direction intersecting the axis O1 when viewed in the axial direction. The term "circumferential direction" refers to the direction extending around the axis O1. Furthermore, the term "inside in the axial direction" may refer to the inwardly facing side of an object in the axial direction, and the term "outside in the axial direction" may refer to the opposite side of the object. The term "input side" refers to the side of the speed reducer 1 connected to a drive source, and the term "output side" refers to the side of the speed reducer 1 connected to the above-mentioned mechanical part such as an arm. The mechanical part receives the output from the speed reducer 1.

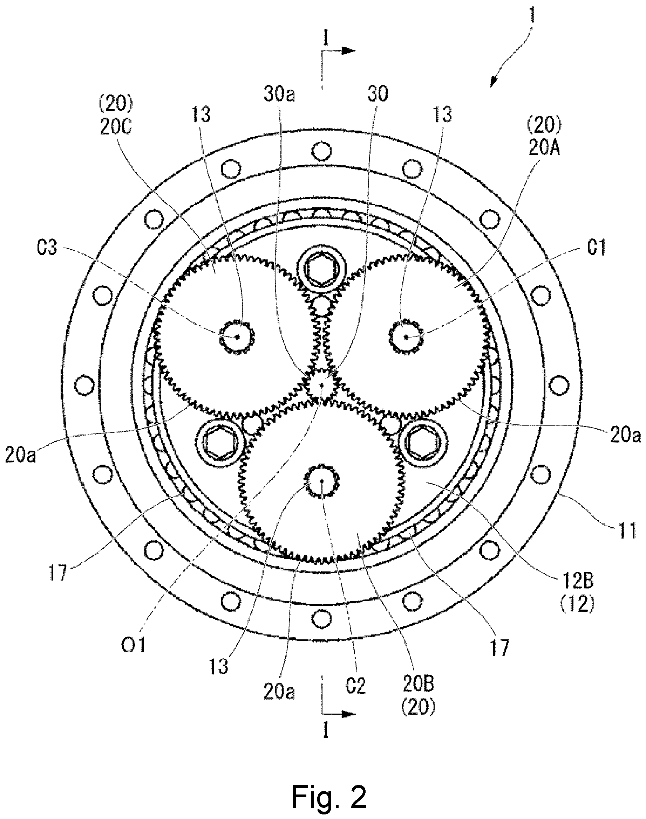

Fig. 2 is a schematic front view showing the speed reducer 1 as viewed in the axis O1 direction from the input side. As shown in Fig. 2, the speed reducer 1 includes three spur gears 20 (20A, 20B, 20C) corresponding to transmission gears, and an input gear 30. The spur gears 20A, 20B and 20C are formed as involute gears. Similarly, the input gear 30 is also formed as an involute gear.

Fig. 2 shows the axis O1, which is the axis of rotation of the input gear 30, and transmission axes C1, C2 and C3 of the three spur gears 20A, 20B and 20C. The transmission axes C1, C2 and C3 are substantially evenly spaced away from each other on an imaginary circle centered on the axis O1. The input gear 30 is configured to rotate around the axis O1. The first spur gear 20A is configured to rotate around the first transmission axis C1. The second spur gear 20B is configured to rotate around the second transmission axis C2. The third spur gear 20C is configured to rotate around the third transmission axis C3. The speed reducer 1 has the plurality of (for example, three) spur gears 20 and the input gear 30 exposed on the input side thereof.

The input gear 30 engages with the spur gears 20A, 20B and 20C, which enables transmission of the driving force. The input gear 30 has, at the front end thereof, external teeth 30a on the outer peripheral surface. The external teeth 30a engage with external teeth 20a of the spur gears 20A, 20B and 20C. With such arrangement, as the input gear 30 rotates around the axis O1, the spur gears 20A, 20B and 20C synchronously rotate.

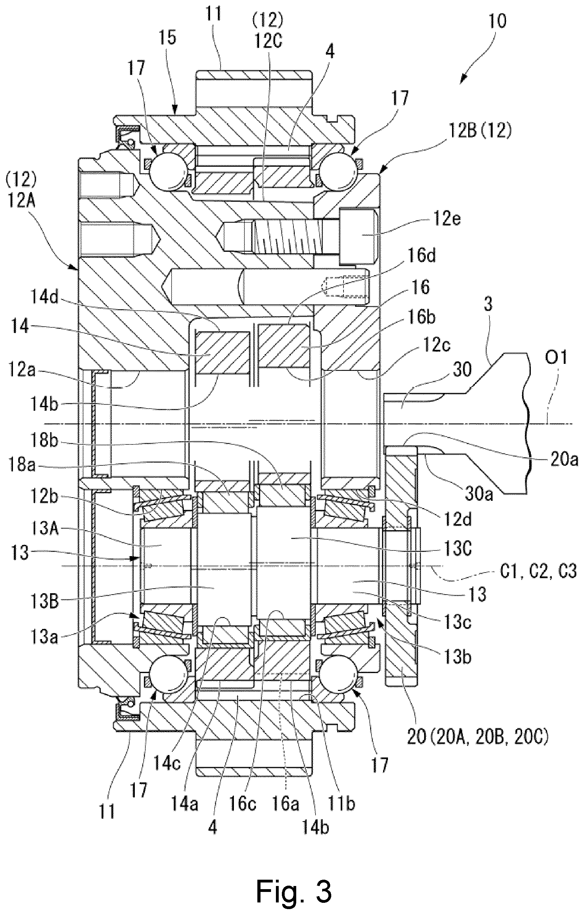

Fig. 3 is a sectional view of the speed reducer 1 relating to the present embodiment (cut along a plane including the axis O1 shown in Fig. 1), more specifically, a sectional view along the line I-I in Fig. 2.

In the speed reducer 1 relating to the present embodiment, as the input shaft 3 including the input gear 30 is rotated, crankshafts 13 are resultantly rotated. In this manner, as eccentric portions 13B and 13C of the crankshafts 13 rotate, oscillating gears 14 and 16 can resultantly oscillatorily rotate. With such arrangement, the speed reducer 1 can reduce the speed of rotation input thereto and output the speed-reduced rotation. The central axes of the three crankshafts 13 respectively coincide with the transmission axes C1, C2 and C3. This means that the rotation of the three crankshafts 13 is transmitted to the first and second oscillating gears 14 and 16. The first and second oscillating gears 14 and 16 are located in the inner space enclosed by an outer tube 11 and a carrier 12.

As shown in Figs. 2 and 3, the speed reducer 1 includes the outer tube 11, the carrier 12 fixedly attached to the industrial robot 100, the input shaft 3, the plurality of (for example, three) crankshafts 13 rotatably supported by the carrier 12, the first oscillating gear 14, the second oscillating gear 16, and the plurality of (for example, three) spur gears 20 (20A, 20B, 20C). The three spur gears 20A, 20B and 20C are respectively incorporated in the three crankshafts 13. The first and second oscillating gears 14 and 16 surround the crankshafts 13.

The outer tube 11 is shaped like a circular cylinder and constitutes the outer surface of the speed reducer 1. The outer tube 11 has on the inner circumferential surface thereof a plurality of pin grooves 11b. The pin grooves 11b extend in the axial direction of the outer tube 11. The pin grooves 11b have a semicircular sectional shape when cut along a plane orthogonal to the axial direction. The pin grooves 11b are arranged at even intervals in the circumferential direction along the inner circumferential surface of the outer tube 11. The outer tube 11 forms a cylindrical internal space in which the crankshafts 13 and the first and second oscillating gears 14 and 16 are housed, when combined with the carrier 12.

The outer tube 11 has a plurality of internal tooth pins 4. The internal tooth pins 4 are substantially cylindrical members extending in the axial direction and placed in the pin grooves 11b. More specifically, each internal tooth pin 4 is fitted in the corresponding pin groove 11b and retained therein such that it extends in the axial direction of the outer tube 11. In this manner, the internal tooth pins 4 are arranged at regular intervals in the circumferential direction of the outer tube 11. The internal tooth pins 4 engage with first external teeth 14a of the first oscillating gear 14 and second external teeth 16a of the second oscillating gear 16.

The carrier 12 is housed within the outer tube 11 while they are coaxially arranged. The carrier 12 is configured to rotate relative to the outer tube 11 about the same axis. More specifically, while being inside the outer tube 11 in the radial direction, the carrier 12 is supported via a pair of main bearings 17 such that the carrier 12 is configured to rotate relative to the outer tube 11. The main bearings 17 are disposed apart from each other in the axial direction.

The carrier 12 includes a base portion and an end plate 12B. The base portion includes a base plate 12A and a plurality of (for example, three) shaft portions 12C.

The base plate 12A is arranged within the outer tube 11 near one of the ends of the outer tube 11 in the axial direction. The base plate 12A has a circular through-hole 12a at the center thereof in the radial direction. The base plate 12A further has a plurality of (for example, three) crankshaft mounting holes (hereinafter, referred to simply as "mounting holes 12b"), which are arranged next to each other at equal intervals in the circumferential direction around the through hole 12a. The crankshafts 13 are respectively placed in the three mounting holes 12b. The central axes of the mounting holes 12b extending in the axial direction respectively coincide with the transmission axes C1, C2 and C3.

The end plate 12B is arranged within the outer tube 11 near the other of the ends of the outer tube 11 in the axial direction. Furthermore, the end plate 12B is spaced away from the base plate 12A in the axial direction. The end plate 12B has a through-hole 12c at its radial center. The end plate 12B further has a plurality of (for example, three) crankshaft mounting holes (hereinafter referred to simply as "mounting holes 12d"), which are arranged next to each other at equal intervals in the circumferential direction around the through hole 12c. The mounting holes 12d are positioned such that they face the mounting holes 12b formed in the base plate 12A in the axial direction. Inside the outer tube 11, a closed space is defined by the inner surfaces of the end and base plates 12B and 12A and the inner circumferential surface of the outer tube 11.

The three shaft portions 12C are integrated with the base plate 12A and extend linearly from the principal (inner) surface of the base plate 12A toward the end plate 12B. The three shaft portions 12C are arranged next to each other at equal intervals in the circumferential direction. The shaft portions 12C are fastened to the end plate 12B with bolts 12e. In this manner, the base plate 12A, shaft portions 12C and end plate 12B together constitute a single integral piece.

The input shaft 3 serves as an input part for receiving a driving force input thereto from a driving motor (the motor 160 shown in Fig. 1). The input shaft 3 is disposed such that its central axis is aligned with the central axis of the outer tube 11 and the carrier 12, and the input shaft 3 is configured to rotate on an axis. The input gear 30 is provided on the input shaft 3 on the outer circumferential surface of the front end thereof.

The three crankshafts 13 are arranged within the outer tube 11 at regular intervals around the input shaft 3. Each crankshaft 13 is supported by a pair of crank bearings 13a and 13b such that it is configured to rotate on its axis relative to the carrier 12. More specifically, a first crank bearing 13a is mounted on a portion of each crankshaft 13 that is at a predetermined distance from one of the ends of the crankshaft 13 in the axial direction inwardly in the axial direction. The first crank bearings 13a are mounted in the mounting holes 12b in the base plate 12A. A second crank bearing 13b is attached to the other end of each crankshaft 13 in the axial direction. The second crank bearings 13b are mounted in the mounting holes 12d in the end plate 12B. In this manner, the crankshafts 13 are rotatably supported by the base plate 12A and the end plate 12B.

Each crankshaft 13 includes a shaft main body 13A and eccentric portions 13B and 13C formed integrally with the shaft main body 13A. The eccentric portion 13B may be referred to as the first eccentric portion 13B. Similarly, the eccentric portion 13C may be referred to as the second eccentric portion 13C. The first and second eccentric portions 13B and 13C are arranged next to each other in the axial direction between the portions of the crankshaft 13 that are supported by the crank bearings 13a and 13b. The first and second eccentric portions 13B and 13C are each shaped like a circular cylinder. The first and second eccentric portions 13B and 13C project radially outward from the shaft main body 13A while being eccentric to the central axis of the shaft main body 13A. The first and second eccentric portions 13B and 13C are arranged with predetermined eccentricities from the central axis of the shaft main body 13A and have a phase difference of a predetermined angle from each other.

One of the ends of each crankshaft 13 (the right end in Fig. 3), specifically, the portion mounted in the mounting hole 12d in the end plate 12B has a mating portion 13c extending outwardly in the axial direction. The spur gears 20 (20A, 20B, 20C) are attached to the mating portions 13c. The speed reducer 1 relating to the present embodiment is not limited to the example case shown in Fig. 2. For example, the crankshafts 13 may be oriented oppositely in the axial direction. In this case, the mating portions 13c may be arranged outside the mounting holes 12b formed in the base plate 12A in the axial direction.

In the speed reducer 1, the crankshafts 13 can accomplish improved durability since the difference between the torques transmitted to the respective crankshafts 13 is reduced. In addition, the speed reducer 1 can reduce the impact imparted on the crankshafts 13, thereby preventing delamination of the surface of the crank (i.e., the surface configured to transmit the torque from the crankshafts 13 to the spur gears 20).

The first and second oscillating gears 14 and 16 may be trochoid or cycloid gears formed based on the same drawing for design. The first oscillating gear 14 is located in the closed space within the outer tube 11 and is attached to the first eccentric portion 13B of each crankshaft 13 via a first roller bearing 18a. As each crankshaft 13 rotates, the first eccentric portion 13B eccentrically rotates. The eccentric rotation results in the first oscillating gear 14 oscillatorily rotating while engaging with the internal tooth pins 4.

The first oscillating gear 14 is sized such that it is slightly smaller than the inner diameter of the outer tube 11. The first oscillating gear 14 has first external teeth 14a, a central through hole 14b, a plurality of (for example, three) first eccentric portion insertion holes 14c, and a plurality of (for example, three) shaft portion insertion holes 14d. The first external teeth 14a are shaped like smooth and continuous waves along the entire circumference of the first oscillating gear 14.

The central through hole 14b is formed at the center of the first oscillating gear 14 in the radial direction. The three first eccentric portion insertion holes 14c are arranged in the first oscillating gear 14 at equal intervals next to each other in the circumferential direction around the central through hole 14b. The first eccentric portions 13B of the crankshafts 13 are inserted in the first eccentric portion insertion holes 14c, via the first rolling bearings 18a, which are arranged on the inner walls of the first eccentric portion insertion holes 14c.

The three shaft portion insertion holes 14d are arranged in the first oscillating gear 14 at regular intervals next to each other in the circumferential direction around the central through hole 14b. The shaft portion insertion holes 14d are positioned between the three first eccentric portion insertion holes 14c in the circumferential direction. The shaft portion insertion holes 14d receive therein the corresponding shaft portions 12C with a clearance therebetween.

The second oscillating gear 16 is located in the closed space within the outer tube 11 and is attached to the second eccentric portion 13C of each crankshaft 13 via a second roller bearing 18b. The first and second oscillating gears 14 and 16 are next to each other in the axial direction correspondingly to the positions of the first and second eccentric portions 13B and 13C. As each crankshaft 13 rotates, the second eccentric portion 13C eccentrically rotates. The eccentric rotation results in the second oscillating gear 16 oscillatorily rotating while engaging with the internal tooth pins 4.

The second oscillating gear 16 is sized such that it is slightly smaller than the inner diameter of the outer tube 11 and configured in the same manner as the first oscillating gear 14. In other words, the second oscillating gear 16 has second external teeth 16a, a central through hole 16b, a plurality of (for example, three) second eccentric portion insertion holes 16c, and a plurality of (for example, three) shaft portion insertion holes 16d. These are designed in the same manner as the first external teeth 14a, the central through hole 14b, the first eccentric portion insertion holes 14c, and the shaft portion insertion holes 14d of the first oscillating gear 14. The second eccentric portions 13C of the crankshafts 13 are inserted in the second eccentric portion insertion holes 16c, via the second rolling bearings 18b, which are arranged on the inner walls of the second eccentric portion insertion holes 16c.

The spur gears 20A, 20B and 20C are configured to transmit the rotation of the input gear 30 to the respective crankshafts 13. The spur gears 20A, 20B and 20C are fitted with the mating portions 13c provided on the shaft main bodies 13A of the respective crankshafts 13. The spur gears 20A, 20B and 20C are configured to integrally rotate with the crankshafts 13 on the same axis as the crankshafts 13. The spur gears 20A, 20B and 20C have external teeth 20a engaging with the input gear 30.

One of the outer tube 11 and the carrier 12 is configured to rotate on an axis O1 when acted upon by a driving force transmitted to the crankshafts 13, and the first and second oscillating gears 14 and 16. The other of the outer tube 11 and the carrier 12 is fixedly attached to the first arm 120 (see Fig. 1) of the industrial robot 100 to which the speed reducer 1 is attached.

The spur gears 20 (20A, 20B and 20C) are formed as involute gears. Therefore, the noise generated at the engagement between (i) the spur gears 20A, 20B and 20C and (ii) the input gear 30 is likely to be louder than the noise generated at the engagement between (i) the first and second oscillating gears 14 and 16, which are trochoid gears, and (ii) the outer tube 11. Accordingly, in the present embodiment, the external teeth 20a of the spur gears 20 engage with the external teeth 30a of the input gear 30 of the input shaft 3 with six to eight teeth. In this case, the noise generated at the engagement between the first and second oscillating gears 14 and 16 and the outer tube 11 is reduced to an extremely low level.

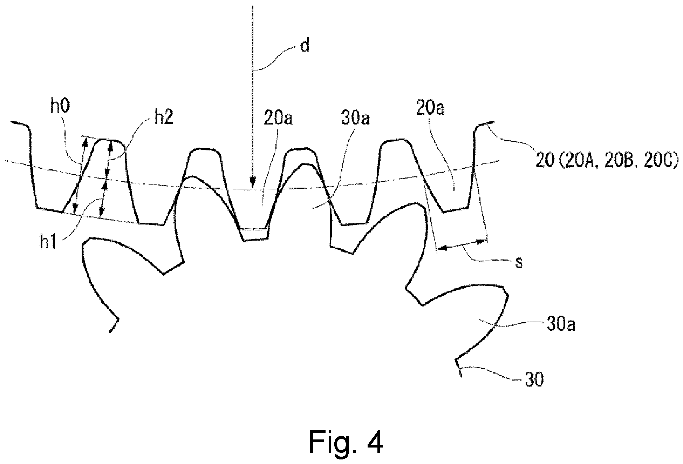

Fig. 4 is an enlarged view of the engagement between the external teeth 20a of the spur gears 20 and the external teeth 30a of the input gear 30. The following more specifically describes the external teeth 20a of the spur gears 20 and the external teeth 30a of the input gear 30 of the input shaft 3 employed in the present embodiment with reference to Fig. 4.

In the following description, the term "tooth profile direction" indicates the direction extending from the dedendum to the addendum or from the addendum to the dedendum. The following describes the shapes and dimensions of the external teeth 20a of the spur gears 20A, 20B and 20C and the external teeth 30a of the input gear 30 employed in the present embodiment. The numerical values mentioned in the following are applicable both to the external teeth 20a of the spur gears 20 and the external teeth 30a of the input gear 30.

In the present embodiment, h1 denotes the coefficient of length of addendum of the external teeth 20a and 30a and falls within the range of 1.2 ≤ h1 ≤ 1.3 and h2 denotes the coefficient of length of dedendum of the external teeth 20a and 30a and falls within the range of 1.25 < h2 ≤ 1.55. This means that the entire tooth length (h0) is equal to the sum of the coefficient of length of addendum (h1) and the coefficient of length of dedendum (h2) (= h1 + h2) and falls within the range of 2.45 < h0 ≤ 2.85. The lower limit of the coefficient of length of addendum (h1) is physically 1.2 or higher in order to achieve a high tooth contact ratio of 2 or higher. The lower limit of the coefficient of length of dedendum (h2) is greater than 1.25 in order to increase the tooth contact ratio and to effectively lower the noise.

In the present embodiment, the external teeth 20a and 30a are configured such that the pressure angle α is no less than 14.5° and no more than 20.0°, the tooth thickness s is no less than 3 mm and no more than 30 mm, and the module m (the pitch circle diameter d/the number of teeth Z) is no less than 0.8 and no more than 3.0. The upper limit of the pressure angle α is 20.0°, which is commonly used. The lower limit of pressure angle α is 14.5° to achieve a high tooth contact ratio. If the pressure angle α is less than 14.5°, high-torque precision speed reducers may experience tooth breakage or damage, for example. The foregoing numerical range of the tooth thickness s (no less than 3 mm and no more than 30 mm) is a commonly applicable range for precision speed reducers. More specifically, if the tooth thickness s is less than 3 mm, severe edge loading takes place at the engagement and an effective contact width cannot be acquired, which results in noise. If the tooth thickness s is greater than 30 mm, the precision speed reducers inevitably elongate in the thickness direction. The foregoing numerical range of the module m (no less than 0.8 and no more than 3.0) is a commonly applicable range for precision speed reducers. More specifically, if the module m is less than 0.8, the top land of the teeth becomes too small as the entire tooth length increases. This may be translated into difficulties in the manufacturing of the gears since thermal treatment may create cracks, for example. If the module m is greater than 3.0, the number of teeth is reduced and the tooth contact ratio cannot be thus greater than 2.

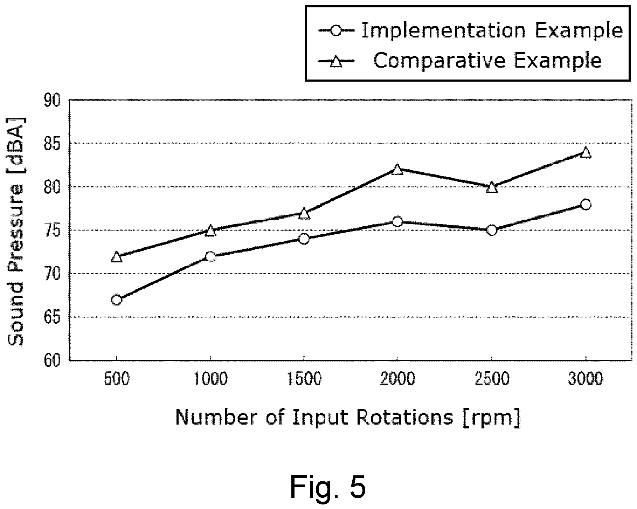

Table 1 and Fig. 5 show the results of tests performed on (i) the speed reducer 1 relating to an implementation example, where the external teeth 20a of the spur gears 20A, 20B and 20C and the external teeth 30a of the input gear 30 satisfy the above-described numerical ranges and (ii) a speed reducer relating to a comparative example where the above-described numerical ranges are not satisfied, to measure the sound pressure (dBA) while the number of input rotations (rpm) is changed.

**[Table 1]**

| Number of Input Rotations [rpm] | 500 | 1000 | 1500 | 2000 | 2500 | 3000 |
|---|---|---|---|---|---|---|
| Implementation Example Sound Pressure [dBA] | 67 | 72 | 74 | 76 | 75 | 78 |
| Comparative Example Sound Pressure [dBA] | 72 | 75 | 77 | 82 | 80 | 84 |

In the implementation example, the external teeth 20a of the spur gears 20 and the external teeth 30a of the input gear 30 are designed as follows: the module m is 1.25, the tooth thickness s is 14.5 mm, the coefficient of length of addendum h1 is 1.3, the coefficient of length of dedendum h2 is 1.55, and the pressure angle α is 20°. In the comparative example, in contrast, the external teeth 20a of the spur gears 20 and the external teeth 30a of the input gear 30 are designed as follows: the module m is 1.25, the tooth thickness s is 14.5 mm, the coefficient of length of addendum h1 is 1, the coefficient of length of dedendum h2 is 1.25, and the pressure angle α is 20°.

The speed reducers relating to the implementation and comparative examples are rotated under such conditions that the total speed ratio is 236.36, the load torque applied to the speed reducers is 4900 Nm, and the load moment applied to the speed reducers is 11000 Nm. The tests measured the sound pressure (dBA) while the number of input rotations was set at 500 rpm to 3000 rpm in increments of 500 rpm. In Fig. 5, the circles indicate the results corresponding to the implementation example, and the triangles indicate the results corresponding to the comparative example.

As shown in Table 1 and Fig. 5, the sound pressure is lower in the implementation example than in the comparative example by 3 to 6 dBA for all the values of the number of input rotations. The results have thus confirmed that the noise generated by the sliding friction between the surface of the external teeth 20a and the surface of the external teeth 30a can be lower in the implementation example. Specifically, since the coefficient of length of the addendum is 1.3 and the coefficient of length of dedendum is 1.55, the noise level can be lower in the implementation example than in the comparative example.

As described above, the speed reducer 1 of the present embodiment includes: the outer tube 11 having the internal teeth surrounding the axis of rotation; the carrier 12 rotatably provided inside the outer tube 11 and fixedly attached to the output shaft; the input shaft 3 provided in the driving source; the plurality of crankshafts 13 rotatably supported by the carrier 12 and connected to the input shaft 3, where the crankshafts 13 each have eccentric portions eccentric to the axis of rotation of the output shaft; the oscillating gears 14 and 16 configured to oscillatorily rotate together with the eccentric portions of the crankshafts 13; the plurality of (three) spur gears 20A, 20B, 20C configured to rotate when acted upon by the oscillatory rotation of the oscillating gears 14 and 16, where the spur gears 20A, 20B and 20C are respectively coaxially arranged with the crankshafts 13; and the input gear 30 provided on the input shaft 3, where the input gear 30 engages with the spur gears 20A, 20B and 20C to synchronously rotate the spur gears 20A, 20B and 20C. The input gear 30 and the spur gears 20A, 20B and 20C are configured to engage with each other with 6 to 8 teeth. Therefore, the input gear 30 and the spur gears 20A, 20B and 20C engage with each other with 6 to 8 teeth. In this manner, the present embodiment can successfully lower the noise generated at the engagement between the input gear 30 and the spur gears 20A, 20B and 20C. As a result, tall teeth are applicable to the spur gears 20A, 20B and 20C, so that the speed reducer 1 can achieve a lowered noise level. Therefore, the present embodiment can be effectively applicable to precision speed reducers including the above-described industrial robot 100.

Furthermore, the speed reducer 1 of the present embodiment includes: the outer tube 11 having the internal teeth surrounding the axis of rotation; the carrier 12 rotatably provided inside the outer tube 11 and fixedly attached to the output shaft; the input shaft 3 provided in the driving source; the plurality of crankshafts 13 rotatably supported by the carrier 12 and connected to the input shaft 3, where the crankshafts 13 each have eccentric portions eccentric to the axis of rotation of the output shaft; the oscillating gears 14 and 16 configured to oscillatorily rotate together with the eccentric portions of the crankshafts 13; the plurality of spur gears 20 configured to rotate when acted upon by the oscillatory rotation of the oscillating gears 14 and 16, where the spur gears 20 are respectively coaxially arranged with the crankshafts 13, and the input gear 30 provided on the input shaft 3, where the input gear 30 engages with the spur gears 20A, 20B and 20C to synchronously rotate the spur gears 20A, 20B and 20C. The input gear 30 and the spur gears 20A, 20B and 20C are configured such that the coefficient of length of addendum is no less than 1.2 and no more than 1.3, and the coefficient of length of dedendum is greater than 1.25 and no more than 1.55. In this case, the input gear 30 and the spur gears 20A, 20B, and 20C are configured such that the coefficient of length of addendum is no less than 1.2 and no more than 1.3, and the coefficient of length of dedendum is greater than 1.25 and no more than 1.55. In this manner, the present embodiment can successfully lower the noise generated at the engagement between the input gear 30 and the spur gears 20A, 20B and 20C. As a result, tall teeth are applicable to the spur gears 20A, 20B and 20C, so that the speed reducer 1 can achieve a lowered noise level. Therefore, the present embodiment can be effectively applicable to precision speed reducers including the above-described industrial robot 100.

In the speed reducer 1 relating to the present embodiment, the input gear 30 and the spur gears 20A, 20B and 20C are preferably sized that the pressure angle is no less than 14.5° and no more than 20.0°, the tooth thickness is no less than 3 mm and no more than 30 mm and the module (the pitch circle diameter/the number of teeth) is no less than 0.8 and no more than 3.0. In this manner, the present embodiment can successfully lower the noise generated at the engagement between the input gear 30 and the spur gears 20A, 20B and 20C.

In addition, the present embodiment includes the pedestal 110, the first arm 120, the second arm 130 including the working head 140, the motor 160 for providing a driving force to rotate the first and second arms 120 and 130 provided on the pedestal 110, and the speed reducer 1 for reducing the speed of the rotation of the motor 160. The speed reducer 1 includes: the outer tube 11 having the internal teeth surrounding the axis of rotation; the carrier 12 rotatably provided inside the outer tube 11 and fixedly attached to the output shaft; the input shaft 3 provided in the driving source; the plurality of crankshafts 13 rotatably supported by the carrier 12 and connected to the input shaft 3, where the crankshafts 13 each have eccentric portions eccentric to the axis of rotation of the output shaft; the oscillating gears 14 and 16 configured to oscillatorily rotate together with the eccentric portions of the crankshafts 13; the plurality of spur gears 20A, 20B and 20C configured to rotate when acted upon by the oscillatory rotation of the oscillating gears 14 and 16, where the spur gears 20A, 20B and 20C are respectively coaxially arranged with the crankshafts 13; and the input gear 30 provided on the input shaft 3, where the input gear 30 engages with the spur gears 20A, 20B and 20C to synchronously rotate the spur gears 20A, 20B and 20C. The input gear 30 and the spur gears 20A, 20B and 20C are configured to engage with each other with 6 to 8 teeth. Therefore, the input gear 30 and the spur gears 20A, 20B and 20C engage with each other with 6 to 8 teeth. In this manner, the present embodiment can successfully lower the noise generated at the engagement between the input gear 30 and the spur gears 20A, 20B and 20C. Accordingly, the precision speed reducer can be effectively applicable to rotating devices including the industrial robot 100 that includes the pedestal 110, the first arm 120, the second arm 130 including the working head 140, the motor 160 for providing a driving force to rotate the first and second arms 120 and 130, and the speed reducer 1 for reducing the speed of the rotations of the motor 160.

In addition, the present embodiment includes the pedestal 110, the first arm 120, the second arm 130 including the working head 140, the motor 160 for providing a driving force to rotate the first and second arms 120 and 130 provided on the pedestal 110, and the speed reducer 1 for reducing the speed of the rotations of the motor 160. The speed reducer 1 includes: the outer tube 11 having the internal teeth surrounding the axis of rotation; the carrier 12 rotatably provided inside the outer tube 11 and fixedly attached to the output shaft; the input shaft 3 provided in the driving source; the plurality of crankshafts 13 rotatably supported by the carrier 12 and connected to the input shaft 3, where the crankshafts 13 each have eccentric portions eccentric to the axis of rotation of the output shaft; the oscillating gears 14 and 16 configured to oscillatorily rotate together with the eccentric portions of the crankshafts 13; the plurality of spur gears 20A, 20B and 20C configured to rotate when acted upon by the oscillatory rotation of the oscillating gears 14 and 16, where the spur gears 20A, 20B and 20C are respectively coaxially arranged with the crankshafts 13; and the input gear 30 provided on the input shaft 3, where the input gear 30 engages with the spur gears 20A, 20B and 20C to synchronously rotate the spur gears 20A, 20B and 20C. The input gear 30 and the spur gears 20A, 20B and 20C are configured such that the coefficient of length of addendum is no less than 1.2 and no more than 1.3, and the coefficient of length of dedendum is greater than 1.25 and no more than 1.55. In this way, the input gear 30 and the spur gears 20A, 20B, and 20C are configured such that the coefficient of length of addendum is no less than 1.2 and no more than 1.3 and the coefficient of length of dedendum is greater than 1.25 and no more than 1.55. In this manner, the present embodiment can successfully lower the noise generated at the engagement between the input gear 30 and the spur gears 20A, 20B and 20C. Accordingly, the precision speed reducer can be effectively applicable to rotating devices including the industrial robot 100 that includes the pedestal 110, the first arm 120, the second arm 130 including the working head 140, the motor 160 for providing a driving force to rotate the first and second arms 120 and 130 provided on the pedestal 110, and the speed reducer 1 for reducing the speed of the rotations of the motor 160.

The speed reducer 1 relating to the above-described embodiment can successfully lower the noise generated at the engaging between the input gear 30 and the plurality of (three) spur gears 20. As a result, the present embodiment can accomplish lowered noise.

According to the invention, the input gear 30 and the spur gears 20 are configured to engage with each other with 6 to 8 teeth. In addition, according to the above-described embodiment, the input gear 30 and the spur gears 20 are configured such that the coefficient of length of addendum is no less than 1.2 and no more than 1.3, and the coefficient of length of dedendum is greater than 1.25 and no more than 1.55. Furthermore, according to the invention, the input gear 30 and the spur gears 20 are configured such that the pressure angle is no less than 14.5° and no more than 20.0°, the tooth thickness is no less than 3 mm and no more than 30 mm and the module is no less than 0.8 and no more than 3.0.

In the present embodiment, the speed reducer 1 has one input gear 30 and three spur gears 20A, 20B, and 20C. The number of spur gears 20 is not limited to such, and the speed reducer 1 is only required to include more than one spur gear 20. As an alternative example, the speed reducer 1 may include one input gear 30 and two spur gears 20.

In the speed reducer 1 relating to the above-described embodiment, as the input shaft 3 including the input gear 30 is rotated, the three crankshafts 13 are resultantly rotated. As a result of the rotation of the eccentric portions 13B and 13C of each crankshaft 13, the two oscillating gears 14 and 16 are oscillatorily rotated. In this way, the input rotation is slowed down, and the reduced rotations can be output. This is the case described in the foregoing section. The present disclsoure, however, is not limited to such. The speed reducer 1 may be configured in any manner as long as it is an eccentric oscillating speed reducer 1 that slows down the rotation of the crankshafts to obtain slower output rotation.

The foregoing embodiments disclosed herein describe a plurality of physically separate constituent parts. They may be combined into a single part, and any one of them may be divided into a plurality of physically separate constituent parts. Irrespective of whether or not the constituent parts are integrated, they are acceptable as long as they are configured to attain the object of the invention.

In the foregoing embodiments, the speed reducer 1 is applied to the industrial robot 100.

According to the invention, a speed reducer comprises: an outer tube 11 having a plurality of internal teeth surrounding an axis of rotation; a carrier 12 rotatably provided inside the outer tube 11, the carrier 12 being fixedly attached to an output shaft; an input shaft 3 provided on a driving source; a plurality of crankshafts 13 rotatably supported by the carrier 12 and connected to the input shaft 3, the crankshafts 13 each having an eccentric portion eccentric to an axis of rotation of the output shaft; an oscillating gear 14, 16 configured to oscillatorily rotate together with the eccentric portions of the crankshafts 13; a plurality of transmission gears 20, 20A, 20B, 20C configured to rotate when acted upon by the oscillatory rotation of the oscillating gear 14, 16, the transmission gears 20, 20A, 20B, 20C being respectively coaxial with the crankshafts 13; and an input gear 30 provided on the input shaft 3, the input gear 30 engaging with the transmission gears 20, 20A, 20B, 20C to synchronously rotate the transmission gears 20, 20A, 20B, 20C, wherein the input gear 30 and the transmission gears 20, 20A, 20B, 20C engage with each other with 6 to 8 teeth, and wherein the input gear 30 and the transmission gears 20, 20A, 20B, 20C are configured such that a pressure angle is no less than 14.5° and no more than 20.0°, a tooth thickness is no less than 3 mm and no more than 30 mm and a module (a pitch circle diameter/the number of teeth) is no less than 0.8 and no more than 3.0.

### LIST OF REFERENCE NUMBERS

1...speed reducer, 3... input shaft, 11...outer tube, 12...carrier, 13...crankshaft, 14...first oscillating gear, 16...second oscillating gear, 20, 20A, 20B, 20C...spur gear (transmission gear), 20a...external teeth, 30...input gear, 100 ...industrial robot (rotating device), 110...pedestal (device body), 120 ...first arm (rotating body), 130...second arm (rotating body), 140...working head, O1...axis

## Claims

1. A speed reducer (1) for an industrial robot, comprising:
an outer tube (11) having a plurality of internal teeth surrounding an axis of rotation;
a carrier (12) rotatably provided inside the outer tube (11), the carrier (12) being fixedly attached to an output shaft;
an input shaft (3) provided on a driving source;
a plurality of crankshafts (13) rotatably supported by the carrier (12) and connected to the input shaft (3), the crankshafts (13) each having an eccentric portion eccentric to an axis of rotation of the output shaft;
an oscillating gear (14, 16) configured to oscillatorily rotate together with the eccentric portions of the crankshafts (13);
a plurality of transmission gears (20, 20A, 20B, 20C) configured to rotate when acted upon by the oscillatory rotation of the oscillating gear (14, 16), the transmission gears (20, 20A, 20B, 20C) being respectively coaxial with the crankshafts (13); and
an input gear (30) provided on the input shaft (3), the input gear (30) engaging with the transmission gears (20, 20A, 20B, 20C) to synchronously rotate the transmission gears (20, 20A, 20B, 20C),
wherein the input gear (30) and the transmission gears (20, 20A, 20B, 20C) engage with each other with 6 to 8 teeth,
**characterized in that**
the input gear (30) and the transmission gears (20, 20A, 20B, 20C) are configured such that a pressure angle is no less than 14.5° and no more than 20.0°, a tooth thickness is no less than 3 mm and no more than 30 mm and a module (a pitch circle diameter/the number of teeth) is no less than 0.8 and no more than 3.0.

2. A rotating device (100) comprising:
a device body (110);
a rotating body (130) with a working head (140);
a motor (160) provided on the device body (110), the motor (160) being configured to produce a driving force to rotate the rotating body (130); and
the speed reducer (1) of claim 1 for reducing speed of rotation of the motor (160).

## Patentansprüche

1. Untersetzungsgetriebe (1) für einen Industrieroboter, umfassend:
ein Außenrohr (11) mit einer Vielzahl von Innenzähnen, die eine Drehachse umgeben;
einen Träger (12), der drehbar im Inneren des Außenrohrs (11) vorgesehen ist, wobei der Träger (12) fest an einer Abtriebswelle angebracht ist;
eine Antriebswelle (3), die an einer Antriebsquelle vorgesehen ist;
eine Vielzahl von Kurbelwellen (13), die drehbar von dem Träger (12) gehalten sind und mit der Antriebswelle (3) verbunden sind, wobei die Kurbelwellen (13) jeweils einen exzentrischen Abschnitt aufweisen, der exzentrisch zu einer Drehachse der Abtriebswelle ist;
ein oszillierendes Zahnrad (14, 16), das dazu eingerichtet ist, sich zusammen mit den exzentrischen Abschnitten der Kurbelwellen (13) oszillierend zu drehen;
eine Vielzahl von Übersetzungszahnrädern (20, 20A, 20B, 20C), die dazu eingerichtet sind, sich zudrehen, wenn sie von der oszillierenden Drehung des oszillierenden Zahnrads (14, 16) beaufschlagt werden, wobei die Übersetzungszahnräder (20, 20A, 20B, 20C) jeweils koaxial mit den Kurbelwellen (13) sind; und
ein Antriebszahnrad (30), das auf der Antriebswelle (3) vorgesehen ist, wobei das Antriebszahnrad (30) mit den Übersetzungszahnrädern (20, 20A, 20B, 20C) in Eingriff steht, um die Übersetzungszahnräder (20, 20A, 20B, 20C) synchron zu drehen,
wobei das Antriebszahnrad (30) und die Übersetzungszahnräder (20, 20A, 20B, 20C) mit 6 bis 8 Zähnen ineinandergreifen,
**dadurch gekennzeichnet, dass**
das Antriebszahnrad (30) und die Übersetzungszahnräder (20, 20A, 20B, 20C) derart eingerichtet sind, dass ein Eingriffswinkel wenigstens 14,5° und höchstens 20,0°, eine Zahndicke wenigstens 3 mm und höchstens 30 mm und ein Modul (Teilkreisdurchmesser/Zähnezahl) wenigstens 0,8 und höchstens 3,0 beträgt.

2. Rotationsvorrichtung (100) umfassend:
einen Vorrichtungskörper (110);
einen Rotationskörper (130) mit einem Arbeitskopf (140);
einen Motor (160), der an dem Vorrichtungskörper (110) vorgesehen ist, wobei der Motor (160) dazu eingerichtet ist, eine Antriebskraft zum Drehen des Drehkörpers (130) zu erzeugen; und
das Untersetzungsgetriebe (1) nach Anspruch 1 zum Reduzieren der Drehzahl des Motors (160).

## Revendications

1. Réducteur de vitesse (1) pour un robot industriel, comprenant :
un tube extérieur (11) présentant une pluralité de dents intérieures entourant un axe de rotation ;
un support (12) disposé en rotation à l'intérieur du tube extérieur (11), le support (12) étant rattaché de manière fixe à un arbre de sortie ;
un arbre d'entrée (3) disposé sur une source d'entraînement ;
une pluralité de vilebrequins (13) soutenus en rotation par le support (12) et connectés à l'arbre d'entrée (3), les vilebrequins (13) présentant chacun une partie excentrique, excentrique à un axe de rotation de l'arbre de sortie ;
un pignon oscillant (14, 16) configuré pour tourner de manière oscillante conjointement avec les parties excentriques des vilebrequins (13) ;
une pluralité de pignons de transmission (20, 20A, 20B, 20C) configurés pour tourner lorsque soumis à une rotation oscillante du pignon oscillant (14, 16), les pignons de transmission (20, 20A, 20B, 20C) étant respectivement coaxiaux avec les vilebrequins (13) ; et
un pignon d'entrée (30) disposé sur l'arbre d'entrée (3), le pignon d'entrée (30) entrant en contact avec les pignons de transmission (20, 20A, 20B, 20C) pour faire tourner de manière synchrone les pignons de transmission (20, 20A, 20B, 20C),
dans lequel le pignon d'entrée (30) et les pignons de transmission (20, 20A, 20B, 20C) entrent en contact les uns avec les autres sur 6 à 8 dents,
**caractérisé en ce que**
le pignon d'entrée (30) et les pignons de transmission (20, 20A, 20B, 20C) sont configurés de sorte qu'un angle de pression ne soit pas inférieur à 14,5 ° et ne soit pas supérieur à 20,0 °,
une épaisseur de dent n'est pas inférieure à 3 mm et n'est pas supérieure à 30 mm, et un module (un diamètre de cercle primitif/le nombre de dents) n'est pas inférieur à 0,8 et n'est pas supérieur à 3,0.

2. Dispositif rotatif (100) comprenant :
un corps de dispositif (110) ;
un corps rotatif (130) avec une tête de travail (140) ;
un moteur (160) disposé sur le corps de dispositif (110), le moteur (160) étant configuré pour produire une force d'entraînement pour faire tourner le corps rotatif (130) ; et
le réducteur de vitesse (1) de la revendication 1 pour réduire une vitesse de rotation du moteur (160).
